## Europäisches Patentamt

## European Patent Office

## Office européen des brevets

(11) Veröffentlichungsnummer: **0 223 185**
**B1**

(12) **EUROPÄISCHE PATENTSCHRIFT**

(45) Veröffentlichungstag der Patentschrift:
17.01.90

(51) Int. Cl.⁴: **F 16 L 19/08**

(21) Anmeldenummer: **86115600.8**

(22) Anmeldetag: **11.11.86**

(54) Rohrkupplung.

(30) Priorität: **19.11.85 DE 3540981
29.10.86 DE 3636773**

(43) Veröffentlichungstag der Anmeldung:
**27.05.87 Patentblatt 87/22**

(45) Bekanntmachung des Hinweises auf die Patenterteilung:
**17.01.90 Patentblatt 90/03**

(84) Bennante Vertragsstaaten:
**AT BE CH DE ES FR GB GR IT LI LU NL SE**

(56) Entgegenhaltungen:
**DE-A-2 203 248
DE-B-2 244 862
FR-A-2 238 108
GB-A-2 054 078
US-A-3 888 521**

(73) Patentinhaber: **Martin, Norbert
Rosmarinweg 4
D-3004 Isernhagen 5 (DE)**

(72) Erfinder: **Casimir, Frank, Dipl.-Ing.
Adenauer Allee 201
D-5100 Aachen (DE)**
Erfinder: **Quint, Manfred, Dipl.-Ing.
Ehrenstrasse 1B
D-5110 Alsdorf (DE)**

(74) Vertreter: **Wehser, Wulf, Dipl.-Ing.
Patentanwälte Wehser & Fleuchaus Roscherstrasse 12
D-3000 Hannover 1 (DE)**

LIBERGRAF, STOCKHOLM 1990

Beschreibung

Die Erfindung betrifft eine Rohrkupplung mit einem Einsteckstutzen für das anzuschließende Rohrende, der einen Innenkonus zur Aufnahme eines entsprechend geformten Außenkonus an einem Ende (Preßende) einer auf das Rohrende aufgeschobenen Dichthülse aufweist, deren anderes Ende (Schneidende) einen weiteren von dem entsprechend geformten Innenkonus eines Spannringes übergriffenen Außenkonus und wenigstens eine an der Innenfläche der Dichthülse angeordnete gegen die Außenwandung des Rohrendes gerichtete umlaufende Schneidkante hat, während die Innenfläche des Außenkonus des Preßendes zylindrisch ist, wobei der Konuswinkel des Schneidendes größer als der des Preßendes ist.

Bei einer bekannten Anordnung dieser Art (DE-A-3 025 292 oder GB-A-2 054 078) ist die Dichthülse zweiteilig ausgebildet, wobei das Preßende aus einem etwas weicherem und unter hohem Druck plastisch verformbaren Werkstoff besteht.

Nachteilig hierbei ist es, daß derartige verformbare Werkstoffe keine elastischen Eigenschaften aufweisen, so daß eine Abdichtung auf Dauer nicht gewährleistet werden kann. Außerdem verhindert der relativ kleine Konuswinkel des Schneidendes, daß auf das Preßende größere axiale Kräfte aufgebracht werden können, um infolge des dadurch bedingten höheren Anpreßdruckes auf Dauer eine ausreichende Abdichtung zu gewährleisten. Dies wird bei der bekannten Anordnung noch dadurch unterstützt, daß die Dichthülse eine sich in einer senkrechten Ebene zur Rohrachse erstreckende Anschlagfläche aufweist, die gegen eine entsprechende Fläche des Einsteckstutzens stößt und damit die Aufbringung größerer Anpreßkräfte verhindert.

Schließlich ist bei der bekannten Anordnung nachteilig, daß für die Abdichtung ein zusätzliches Bauteil benötigt wird, so daß sowohl die Herstellung, als auch die Montage einen höheren Aufwand erfordern.

Zwar sind Rohrkupplungen bekannt (DE-B-1 450 382) bei denen das Preßende und das Schneidende der Dichthülse dadurch zusammengefaßt sind, daß die nach innen weisenden Schneidkanten auf der Innenfläche des Preßendes angeordnet sind.

Es hat sich jedoch herausgestellt, daß beide Bauformen für Leitungssysteme zur Förderung von agressiven Meiden, beispielweise von H2S-haltigen Sauergasen, ungeeignet sind, weil trotz der Verwendung von korrosionsbeständigen Werkstoffen für die Rohrleitung aufgrund der Agressivität des Mediums der Rohrwerkstoff, aber auch der Werkstoff der Dichthülse, korrodiert, da die Zone mit der maximalen Spannungskonzentration, also insbesondere die Schneidenstirnfläche und die diesen zugeordnete Fläche im Rohrwerkstoff im Bereich der maximalen Beaufschlagung durch das agressive Medium liegen, was zu Spannungsrißkorrosion und damit zur Undichtigkeit führt. Ein weiterer Nachteil der vorbekannten Bauform liegt für den erwähnten Einsatzfall darin, daß die Dichthülsen zur Erzielung der ausreichenden Oberflächenhärte zumindest im Bereich der Schneidkanten gasnitriert werden und dabei an der Oberfläche ihre ursprünglichen, korrosionsbeständigen Werkstoffeigenschaften verlieren. Da derartige Rohrkupplungen nach einiger Betriebszeit bei den erwähnten Einsatzfällen zwangsläufig undicht werden, die geförderten korrosiven Medien, beispielsweise Sauergase, vielfach gesundheitsschädlich, wenn nicht gar giftig sind, müssen Rohrkupplungen der bekannten Art ständig auf Dichtigkeit kontrolliert werden, sofern man ihren Einbau für derartige Einsatzfälle überhaupt zuläßt.

Entsprechendes gilt für eine weitere Rohrkupplung (DE-A-2 203 248), bei welcher sowohl das Preßende als auch das Schneidende mit in den Werkstoff des Rohres eingreifenden Schneidkanten versehen sind. Auch hier tritt ein Undichtwerden der Verbindung durch Korrision im Schneidkantenbereich des Preßendes auf. Da diese Verformungen im plastischen Bereich des Rohrwerkstoffes liegen, wird die auf den Dichtsitz im Bereich des Preßendes wirkende Vorspannung auf Dauer nicht aufrechterhalten, wodurch ebenfalls die Gefahr eines Undichtwerdens der Verbindung gegeben ist. Dies gilt insbesondere dann, wenn die Verbindung Abmessungsänderungen beispielsweise aufgrund von Temperaturschwankungen enterworfen ist.

Die bekannte Dichthülse nach der DE-A-2 203 248 ist mit Schwächungsstellen versehen, welche eine Querschnittsverringerung des Schneidendes und des Preßendes durch Einschnüren begünstigen soll, damit diese Querschnittsverringerung nicht durch die angrenzenden Abschnitte der Dichthülse erschwert wird. Eine Vorspannung im elastischen Bereich läßt sich auf diese Weise jedoch nicht aufbringen.

Der Erfindung liegt demgemäß die Aufgabe zugrunde, eine Rohrkupplung der eingangs genannten Art zu schaffen, die einfach zu montieren ist, eine zuverlässige Abdichtung bietet und darüber hinaus korrosionsbeständig ist.

Diese Aufgabe wird erfindungsgemäß dadurch gelöst, daß der Konuswinkel der Stirnfläche des Schneidendes etwa 70° bis 140° beträgt und daß der Bereich der Dichthülse zwischen dem Preßende und dem Schneidende eine geringere Wandstärke als die angrenzenden Bereiche aufweist, wobei die Innenfläche des Abschnittes geringerer Wandstärke in ihrem axialen mittleren Bereich in einem Abstand zur Rohraußenfläche liegt und die angrenzenden Bereiche in die Innenflächen der Dichthülse übergehen und wobei der Bereiche geringerer Wandstärke eine axial wirkende Feder bildet.

Mit dieser Anordnung wird erreicht, daß beim Anziehen des als Überwurfmutter ausgebildeten Spannringes aufgrund des relativ großen Konuswinkels des Schneidendes zunächst im wesentlichen nur Axialkräfte auf die Dichthülse ausgeübt werden, die zu einem dichten Einpressen des Preßendes in den Konus des Einsteckstutzens führen. Erst wenn die hierdurch erzeugte Widerlagerkraft so groß geworde ist, daß eine ausreichende Abdichtung gesichert ist, verformt sich das Schneidende der Dichthülse elastisch in Richtung auf die Außenfläche des Rohrendes, wobei der Abschnitt geringerer Wandstärke ein gegen das Rohr gerichtetes Abwinkeln des Schneidendes begünstigt und ermöglicht. Da sich diese Verformung im elastischen Bereich abspielt, wird hierdurch gleichzeitig eine Federkraft auf das Preßende ausgeübt, die bei Abmessungsänderungen, insbesondere aufgrund von Temperaturschwankungen, dafür sorgt, daß das Preßende elastisch im Abdichtungszustand gehalten wird.

Außerdem ist ein Einschneiden der Dichthülse im Preßbereich vermieden, so daß den elastischen Bereich des Rohrwerkstoffes überschreitende Verformungen nicht auftreten können.

Da die Abdichtung im Bereich des Preßendes erfolgt, liegt der Eingriff der Schneidkante mit seinen hohen Beanspruchungen des Rohrwerkstoffes und des Dichthülsenwerkstoffes außerhalb jeder Berührungsmöglichkeit mit den durch die Rohrleitung strömenden ggf. aggressiven Medien, gleichwohl wirkt die Schneidkante einerseits und die konisch ausgebildete und am Spannring anliegende Stirnfläche der Dichthülse andererseits wie eine zusätzliche Abdichtung, so daß beide möglichen Leckpfade zwischen Rohraußenfläche und Dichthülseninnenfläche einerseits und zwischen der Dichthülsenaußenfläche und Stutzen-Spannring andererseits doppelt abgedichtet sind.

Vorteilhaft ist es, wenn der Konuswinkel der Stirnfläche des Schneidendes etwa 90° beträgt. Hiermit ist gewährleistet, daß die über den Spannring aufgebrachte Axialkraft, eine hohe Dichtkraft im Bereich des Preßendes bereits bewirkt, bevor bei weiterer Erhöhung der Spannkraft die Schneidkanten in den Rohrwerkstoff gepreßt werden.

Vorteilhaft ist es weiter, wenn der Konuswinkel des Preßendes etwa 24° beträgt, weil dadurch die vom Spannring auf die Dichthülse ausgeübte Axialkraft in eine hohe Flächenpressung im Bereich des Preßendes der Dichthülse umgewandelt werden kann.

Zur Erleichterung der Montage und auch zur Verhinderung einer Beschädigung der Verbindung aufgrund eines zu starken Anziehens des Spannringes ist es zweckmäßig, wenn neben den Schneidkanten oder zwischen diesen wenigstens eine Anlagefläche auf der Innenfläche des Schneidendes angeordnet ist, die sich mithin auf der Außenfläche des Rohrendes abstützt. Auf diese Weise wird die Eindringtiefe des Schneidendes in die Außenfläche des Rohres begrenzt.

Vorteilhaft kann es hierbei sein, wenn beidseits neben den Schneidkanten eine Anlagefläche vorgesehen ist.

In zweckmäßiger Ausgestaltung der Erfindung ist vorgesehen, daß die der Rohraußenfläche zugekehrte Kante des Preßendes abgerundet ausgebildet ist. Hierdurch wird mit Sicherheit eine Spannungsspitze an dem vom Medium berührten Bereich der Kupplung vermieden.

In zweckmäßiger Ausgestaltung der Erfindung ist ferner vorgesehen, daß die Länge der zylindrischen Innenfläche des Preßendes etwa 2/3 der Länge der konischen Außenfläche entspricht. Hierdurch ist beim Aufbringen der Axialkraft durch den Spannring eine gleichmäßige radiale Verformung des Preßendes im Sinne einer Verringerung des Innendurchmessers der Dichthülse in diesem Bereich und damit eine gleichmäßige Anlage der zylindrischen Innenfläche an der Rohraußenfläche möglich. Zweckmäßigerweise ist der Innendurchmesser der zylindrischen Innenfläche etwa 0,4 % größer als der Außendurchmesser des anzuschließenden Rohrendes.

Da für derartige Rohrkupplungen nahtlos gezogene Präzisionsrohre und geschliffene Dichtungshülsen verwendet werden müssen, läßt sich bei der angegebenen Tolerierung die Dichtungshülse gerade noch von Hand auf das Rohr aufschieben und bei der Montage nach dem Einstecken des Rohrendes in den Einsteckstutzen in die konische Öffnung des Einsteckstutzens einschieben. Bei einem Rohraußendurchmesser von beispielsweise 12 mm ergibt sich somit ein Übermaß von 0,05 mm für den Innendurchmesser des zylindrischen Teils der Dichthülse.

In bevorzugter Ausgestaltung der Erfindung ist ferner vorgesehen, daß die Schneidkante eine gegen das Preßende geneigte Schneidfläche aufweist, die unter einem Winkel zwischen 15° und 25°, vorzugsweise unter 20°, gegenüber der Durchmesserebene geneigt ist, sowie eine gegen das andere Ende geneigte Freifläche aufweist, die unter einem Winkel von 12° bis 20°, vorzugsweise 15°, gegenüber der Längsachse der Dichthülse geneigt ist. Eine derartige "Schneidengeometrie ist optimal auf die Zerspanungseigenschaften der hier in Betracht kommenden korrosionsbeständigen Rohrwerkstoffe abgestimmt, insbesondere hochlegierten austenitischen Edelstählen, wie beispielsweise des Rohrwerkstoffes 1.4571. Diese Schneidengeometrie bewirkt beim Anziehen des Spannringes ein einwandfreies Einpressen der Schneidkante in den Rohrwerkstoff unter gleichzeitigem Aufwerfen eines geschlossenen Dichtungswulstes vor der Schneide. Bei der Anordnung von wenigstens zwei Schneiden hintereinander dringt der Rohrwerkstoff in den Zwischenraum zwischen der ersten und der zweiten Schneidkante ein und füllt diesen praktisch vollständig und abdichtend aus.

Der lichte Durchmesser der Dichthülse an der Schneidkante ist zweckmäßigerweise etwa 1,6° % größer als der Außendurchmesser des eingeschobenen Rohres. Hierdurch wird sichergestellt, daß beim Anziehen des Spannringes zunächst einmal das Preßende in ausreichendem Maße in die konische Öffnung des Einsteckstutzens eingepreßt wird, bevor die Schneidkanten unter elastischer Verformung des als Feder wirkenden Zwischenbereichs in den Rohrwerkstoff eingepreßt werden. Bei der Anordnung von zwei Schneidkanten hintereinander beträgt die Tiefe der von den beiden Schneidkanten begrenzten umlaufenden Nut etwa 25% des Abstandes der beiden Schneidkanten zueinander.

In bevorzugter Ausgestaltung der Erfindung ist vorgesehen, daß die Innenfläche der Dichthülse zwischen dem Preßende und der Schneidkante im Schnitt eine nach außen weisende, in etwa bogenförmige Kontur aufweist. Zweckmäßigerweise ist hierbei der Abstand des Scheitelbereichs der Kontur zum angrenzenden Preßende größer als zur angrenzenden Schneidkante. Hierdurch ist gewährleistet, daß beim Aufbringen der Axialkraft über den Spannring dieser als Feder wirkender Zwischenbereich sich definiert nach außen ausbeulen kann, wobei die besondere Positionierung des Scheitelbereichs gewährleistet, daß diese Ausbeulung erst mit Abstand vom Berührungsbereich zwischen dem Preßende und der konischen Öffnung des Einsteckstutzens wirksam werden kann, so daß der konische Teil des Preßendes auch in montierter Stellung über die axiale Federwirkung noch dichtkrafterhöhend "nachgeschoben" wird.

Zweckmäßigerweise wird zumindest die Dichthülse aus einem austenitischen Edelstahl hergestellt, der härter als der Rohrwerkstoff ist. Hierdurch wird ein besseres Einschneiden der Schneidkanten in den Rohrwerkstoff möglich.

Zwar ist es grundsätzlich möglich, aufgrund der besonderen Geometrie der Dichthülse diese einer Oberflächenbehandlung durch Gasnitrierung zu unterwerfen, jedoch hat es sich als besonders vorteilhaft herausgestellt, wenn die Oberflächenhärte durch eine Oberflächenbeschichtung mit Titan-Nitrit erhöht wird. Hierdurch wird die Verschleißfestigkeit und auch die Korrosionsbeständigkeit der Oberfläche erhöht und die Reibung herabgesetzt, so daß eine Rohrkupplung der erfindungsgemäßen Bauart auch ohne Austausch lösbar und damit wiederverwendbar ist.

Die Erfindung wird anhand schematischer Zeichnungen in stark vergrößertem Maßstab erläutert.

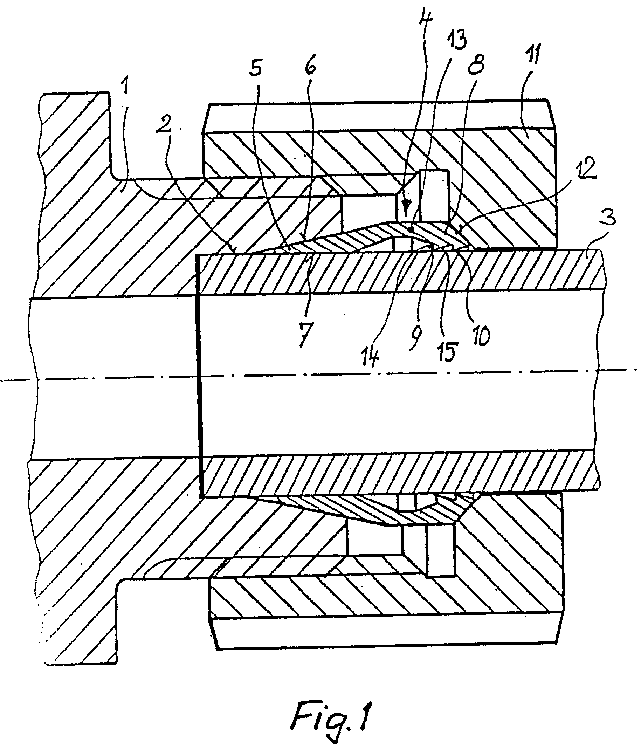

Fig. 1  zeigt im Schnitt eine Ausführungsform der erfindungsgemäßen Rohrkupplung bei Montagebeginn.

Fig. 2  zeigt die Rohrkupplung nach Fig 1 in fertig montiertem Zustand.

Fig. 3  ist ein Schnitt ähnlich Fig 1 bei einer abgewandelten Ausführungsform.

Die Rohrkupplung besteht im wesentlichen aus einem Einsteckstutzen 1 mit einer sich nach außen konisch erweiternden Öffnung 2, in die das anzuschließende Rohrende 3 eingeschoben ist. Auf das Rohrende 3 ist eine Dichthülse 4 aufgeschoben, die an ihrem der konischen Öffnung 2 des Einsteckstutzens 1 zugekehrten Ende 5, nachstehend Preßende genannt, eine konisch zulaufende Außenfläche 6 aufweist. Der Konuswinkel der Außenfläche 6 entspricht im wesentlichen dem Konuswinkel der Öffnung 2 des Einsteckstutzens 1.

Die Innenfläche 7 der Dichthülse 4 im Bereich des Preßendes 5 erstreckt sich über wenigstens einen Teil der Länge der konischen Außenfläche und ist zylindrisch ausgebildet. Der lichte Durchmesser der Zylinderfläche ist geringfügig größer als der Außendurchmesser des anzuschließenden Rohrendes 3.

Die Dichthülse 4 ist an ihrem dem Einsteckstutzen 1 abgekehrten Ende 8, nachstehend Schneidende genannt, mit zwei Schneidkanten 9, 10 versehen, die gegen die Oberfläche des Rohrendes 3 gerichtet sind.

Zusammen mit der Dichthülse 4 ist auf das Rohrende 3 ein Spannring 11 aufgeschoben, der beispielsweise mit einem Innengewinde versehen ist und hiermit auf ein entsprechendes Außengewinde am Einsteckstutzen 1 aufschraubbar ist. Die dem Spannring 11 zugekehrte Stirnfläche 12 der Dichthülse 4 ist hierbei konisch zulaufend ausgebildet und liegt an einer entsprechenden Gegenfläche des Spannringes 11 an, wobei beide Konusflächen im wesentlichen den gleichen Konuswinkel aufweisen. Der Konuswinkel der Stirnfläche 12 ist hierbei größer als der Konuswinkel der konischen Außenfläche 6 des Preßendes 5.

Der zwischen Preßende 5 und Schneidende 8 liegende Bereich 13 der Dichthülse 4 weist eine geringere Wandstärke als die angrenzenden Bereiche auf, wobei die zwischen dem Ende der Zylinderfläche 7 und der Schneidkante 9 liegende Innenfläche der Dichthülse im Schnitt eine nach außen weisende, in etwa bogenförmige Kontur aufweist. Diese bogenförmige Kontur kann je nach Herstellungsverfahren einen stetig gekrümmten Verlauf aufweisen oder aber auch, wie in der Zeichnung dargestellt, durch zwei sich konisch erweiternde Flächen gebildet werden, die in eine zylindrische Zwischenfläche übergehen. Der Scheitelbereich dieser Kontur ist zweckmäßigerweise so angeordnet, daß sein Abstand zum angrenzenden Preßende 5 größer ist als zur angrenzenden Schneidkante 9.

Die Schneidkanten 9 und 10 weisen jeweils eine gegen das Preßende 5 geneigte Schneidfläche 14 auf, die unter einem Winkel zwischen 15° und 25°, vorzugsweise unter 20°, gegenüber der Durchmesserebene geneigt ist. Die gegen das andere Ende der Dichthülse geneigte freie Fläche 15 ist hierbei unter einem Winkel von 12° bis 20°, vorzugsweise 15° gegenüber der Längsachse der Dichthülse 4 geneigt.

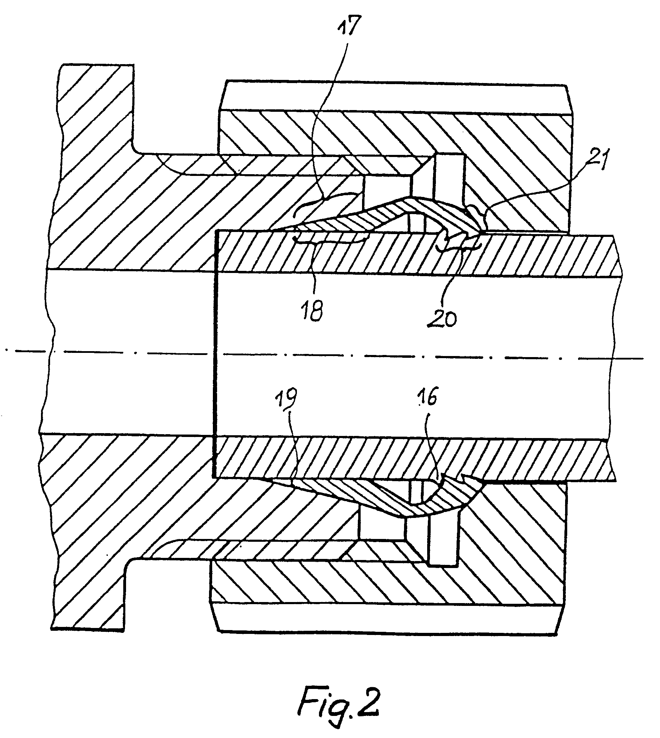

Wird nun der Spannring 11 auf den Einsteckstutzen 1 mit entsprechender Kraft aufgeschraubt, so wird zunächst praktisch ohne Verformung des Bereichs 13 das Preßende 5 in die konische Erweiterung der Öffnung 2 eingepreßt. Da der Konuswinkel des Preßendes 5 nur 24° beträgt, während der Konuswinkel der Stirnfläche 12 90° beträgt, wird das Preßende 5 mit erheblicher Kraft radial zusammengepreßt, so daß die nur ein geringes Übermaß aufweisende zylindrische Fläche 7 auf die Außenfläche des Rohrendes 3 aufgepreßt wird. Erst wenn eine bestimmte Preßkraft beim weiteren Aufschrauben des Spannringes 11 überschritten wird, verformt sich, wie in Fig. 2 dargestellt, der Bereich 13 und die Schneidkanten 9, 10 werden in den Werkstoff des Rohres 3 eingepreßt. Hierbei wird von der Schneide 9 ein Spanwulst 16 aufgeworfen, der dichtend an der Schneidfläche 14 anliegt, während von der Schneide 10 ein Schneidwulst aufgeworfen wird, der in den Ringraum zwischen der Schneidkante 9 und der Schneidkante 10 eingepreßt wird. Da die Verformung des Bereiches 13 im elastischen Bereich des Werkstoffes der Dichthülse 4 erfolgt, hat dieser Bereich die Funktion einer axialwirkenden Feder, die unter Abstützung gegen den Spannring 11 das Preßende 5 in die konische Öffnung 2 des Einsteckstutzens 1 einpreßt. Die Abdichtung zwischen Einsteckstutzen und Dichthülse einerseits und Rohraußenfläche und Dichthülse andererseits erfolgt hierbei über den großflächigen Bereich 17 bzw. 18 ausschließlich über die Flächenpressung. Bildet man die der Rohraußenfläche zugekehrte Vorderkante 19 der Dichtungshülse 4 abgerundet aus, so ist auf jeden Fall sichergestellt, daß diese Kante nicht in den Rohrwerkstoff einschneidet. Damit sind die beiden möglichen Leckpfade durch die Bereiche 17 und 18 wirksam abgedichtet. Bei der gegebenen Konstruktion und bei entsprechender Werkstoffauswahl kann trotz der hohen Dichtkraft infolge der geringen Flächenpressung und der unverletzten Oberfläche des Rohrwerkstoffes keine Spannungsrißkorrosion auftreten, so daß eine Abdichtung auf Dauer gewährleistet ist.

Der von den beiden Schneidkanten 9, 10 überdeckte Bereich 20 sowie der durch die Stirnfläche 12 der Dichthülse 4 definierte Bereich 21 bilden darüber hinaus eine Sekundär- oder Sicherheitsdichtung für die beiden angegebenen Leckpfade dieser Rohrkupplung.

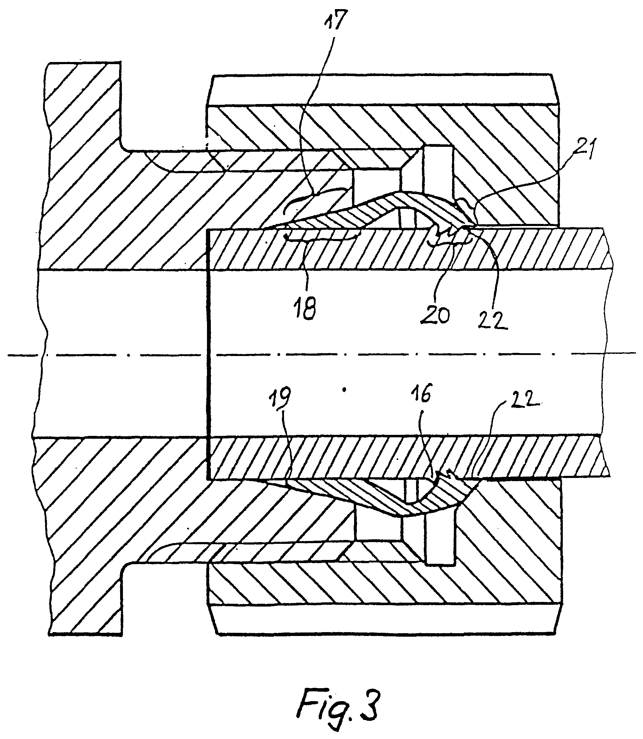

Um eine Beschädigung der Verbindung zu vermeiden, kann gemäß Fig. 3 neben den Schneidkanten 9 und 10 oder zwischen diesen wenigstens eine Anlagefläche 22 auf der Innenfläche des Schneidendes 8 angeordnet sein. Diese Anlagefläche 22 kann auch beidseits neben den Schneidkanten 9 und 10 vorgesehen sein.

Derartige Rohrkupplungen werden insbesondere für Prüf- und Meßleitungen an Erdgasförderleitungen angebracht, die einen Rohraußendurchmesser zwischen 6 und 42 mm aufweisen können. Die Rohrkupplung muß hierbei so ausgebildet sein, daß sie hohe Drücke bis zu 650 bar aufzunehmen vermag und auch bei Betriebstemperaturen bis zu 150° C trotz der hierbei auftretenden erheblichen Wärmedehnungen gegenüber der Einbautemperatur noch dicht ist. Gerade $H_2S$-haltige Sauergase sind bei den angegebenen Drücken und Temperaturen mit dem Wassergehalt im Gas äußerst reaktiv und wirken damit korrodierend auf die Rohr- und Kupplungswerkstoffe ein.

## Patentansprüche

1. Rohrkupplung mit einem Einsteckstutzen für das anzuschließende Rohrende, der einen Innenkonus zur Aufnahme eines entsprechend geformten Außenkonus an einem Ende (Preßende) einer auf das Rohrende aufgeschobenen Dichthülse aufweist, deren anderes Ende (Schneidende) einen weiteren von dem entsprechend geformten Innenkonus eines Spannringes übergriffenen Außenkonus und wenigstens eine an der Innenfläche der Dichthülse angeordnete gegen die Außenwandung des Rohrendes gerichtete umlaufende Schneidkante hat, während die Innenfläche des Außenkonus des Preßendes zylindrisch ist, wobei der Konuswinkel des Schneidendes größer als der des Preßendes ist, dadurch gekennzeichnet, daß der Konuswinkel der Stirnfläche (12) des Schneidendes (8) etwa 70° bis 140° beträgt und daß der Bereich (13) der Dichthülse (4) zwischen dem Preßende (5) und dem Schneidende (8) eine geringere Wandstärke als die angrenzenden Bereiche aufweist, wobei die Innenfläche des Abschnittes geringere Wandstärke in ihrem axialen mittleren Bereich in einem Abstand zur Rohraußenfläche liegt und die angrenzenden Bereiche in die Innenflächen der Dichthülse (4) übergehen und wobei der Bereich geringerer Wandstärke eine axial wirkende Feder bildet.

2. Rohrkupplung nach Anspruch 1, dadurch gekennzeichnet, daß der Konuswinkel der Stirnflächen (12) des Schneidendes (8) etwa 90° beträgt.

3. Rohrkupplung nach Anspruch 1 oder 2, dadurch gekennzeichnet, daß der Konuswinkel des Preßendes (5) etwa 24° beträgt.

4. Rohrkupplung nach einem der vorhergehenden Ansprüche, dadurch gekennzeichnet, daß neben den Schneidkanten (9, 10) oder zwischen diesen wenigstens eine Anlagefläche (22) auf der Innenfläche des Schneidendes (8) angeordnet ist.

5. Rohrkupplung nach Anspruch 4, dadurch gekennzeichnet, daß beidseits neben den Schneidkanten (9, 10) eine Anlagefläche vorgesehen ist.

6. Rohrkupplung nach einem der vorhergehenden Ansprüche, dadurch gekennzeichnet, daß die der Rohraußenfläche zugekehrte Kante (19) des Preßendes (5) abgerundet ausgebildet ist.

7. Rohrkupplung nach einem der vorhergehenden Ansprüche, dadurch gekennzeichnet, daß die Länge der zylindrischen Innenfläche (7) des Preßendes (5) etwa 2/3 der Länge der konischen Außenfläche (6) entspricht.

8. Rohrkupplung nach einem der vorhergehenden Ansprüche, dadurch gekennzeichnet, daß der Innendurchmesser der zylindrischen Innenfläche (7) etwa 0,4 % größer ist als der Außendurchmesser des anzuschließenden Rohrendes (3).

9. Rohrkupplung nach einem der vorhergehenden Ansprüche, dadurch gekennzeichnet, daß die Schneidkante (9, 10) eine gegen das Preßende (5) geneigte Schneidfläche (14) aufweist, die unter einem Winkel zwischen 15° und 25°, vorzugsweise 20° gegenüber der Durchmesserebene geneigt ist, sowie eine gegen das andere Ende geneigte Freifläche (15) aufweist, die unter einem Winkel von 12° bis 20°, vorzugsweise 15°, gegenüber der Längsachse der Dichthülse (4) geneigt ist.

10. Rohrkupplung nach einem der vorhergehenden Ansprüche, dadurch gekennzeichnet, daß der lichte Durchmesser der Dichthülse (4) an der Schneidkante (9, 10) etwa 1,6 % größer ist als der Außendurchmesser des eingeschobenen Rohrendes (3).

11. Rohrkupplung nach einem der vorhergehenden Ansprüche, dadurch gekennzeichnet, daß die Innenfläche der Dichthülse (4) im Bereich (13) zwischen dem Preßende (5) und der Schneidkante (9) im Längsschnitt eine nach außen weisende, in etwa bogenförmige Kontur aufweist.

12. Rohrkupplung nach Anspruch 11, dadurch gekennzeichnet, daß der Abstand des Scheitelbereichs der Kontur der Innenfläche im Bereich (13) zum angrenzenden Preßende (5) größer ist als zur angrenzenden Schneidkante (9).

13. Rohrkupplung nach einem der vorhergehenden Ansprüche, dadurch gekennzeichnet, daß zumindest die Dichthülse aus einem austenitischen Edelstahl hergestellt ist, der härter als der Rohrwerkstoff ist.

14. Rohrkupplung nach einem der vorhergehenden Ansprüche, dadurch gekennzeichnet, daß die Dichthülse (4) mit einer Oberflächenbeschichtung aus Titan-Nitrit versehen ist.

**Revendications**

1. Accouplement de tuyau comprenant une tubulure d'enfichage destinée à l'extrémité de tuyau à raccorder, présentant un cône extérieur formé en conséquence sur une extrémité (extrémité de pressage) d'une douille d'étanchéité enfilée sur l'extrémité de tuyau, douille dont l'autre extrémité (extrémité de coupe) présente un autre cône extérieur recouvert par le cône intérieur formé de façon correspondante, d'une bague de serrage, et au moins une arête de coupe circulaire disposée sur la face intérieure de la douille d'étanchéité et orientée vers la paroi extérieure de l'extrémité du tube, tandis que la face intérieure du cône extérieur de l'extrémité de pressage est cylindrique, l'angle du cône de l'extrémité de coupe étant supérieur a celui de l'extrémité de pressage, caractérisé ce que l'angle de cône de la face frontale (12) de l'extrémité de coupe (8) est d'à peu près 70° à 140° et en ce que la zone (13) de la douille d'étanchéité (4) située entre l'extrémité de pressage (5) et l'extrémité de coupe (8) présente une épaisseur de paroi inférieure à celle des zones limitrophes, la face intérieur de la partie d'épaisseur de paroi plus faible étant située dans sa zone centrale axiale à une certaine distance par rapport à la face extérieure du tube et les zones limitrophes se raccordant avec transition avec les faces intérieures des douilles d'étanchéité (4) et la zone d'épaisseur de paroi plus faible formant un ressort agissant axialement.

2. Accouplement de tuyau selon la revendication 1, caractérisé en ce que l'angle de cône des faces frontales (12) de l'extrémité de coupe (8) est d'à peu près 90°.

3. Accouplement de tuyau selon la revendication 1 ou 2, caractérisé en ce que l'angle de cône de l'extrémité de pressage (5) est d'à peu près 24°.

4. Accouplement de tuyau selon l'une des revendications précédentes, caractérisé en ce qu'une face d'appui (22) est disposée sur la face intérieure de l'extrémité de coupe (8), à côté des arêtes de coupe (9, 10) ou entre ces dernières.

5. Accouplement de tuyau selon la revendication 4, caractérisé en ce qu'une face d'appui est prévue des deux côtés, à côté des arêtes de coupe (9, 10).

6. Accouplement de tuyau selon l'une des revendications précédentes, caractérisé en ce que l'arête (19) de l'extrémité de pressage (5) qui est tournée vers la face extérieure du tuyau est arrondie.

7. Accouplement de tuyau selon l'une des revendications précédentes, caractérisé en ce que la longueur de la face intérieure cylindrique (7) de l'extrémité de pressage (5) correspond à peu près aux 2/3 de la longueur de la face extérieure conique (6).

8. Accouplement de tuyau selon l'une des revendications précédentes, caractérisé en ce que le diamètre intérieur de la face intérieure cylindrique (7) est supérieur d'à peu près 0,4 % au diamètre extérieur de l'extrémité de tuyau (3) à raccorder.

9. Accouplement de tuyau selon l'une des revendications précédentes, caractérisé en ce que l'arête de coupe (9, 10) présente une face de coupe (14), inclinée vers l'extrémité de pressage (5), qui est inclinée sous un angle compris entre 15° et 25°, de préférence 20° par rapport au plan diamétral, ainsi qu'une face libre (15) inclinée vers l'autre extrémité, qui est inclinée sous un angle compris entre 12° et 20°, de préférence 15°, par rapport à l'axe longitudinal de la douille d'étanchéité (4).

10. Accouplement de tuyau selon l'une des revendications précédentes, caractérisé en ce que le diamètre libre de la douille d'étanchéité (4) sur l'arête de coupe (9, 10) est d'à peu près 1,6 % supérieur au diamètre extérieur de l'extrémité de tuyau (3) insérée.

11. Accouplement de tuyau selon l'une des revendications précédentes, caractérisé en ce que la face intérieure de la douille d'étanchéité (4) présente en coupe longitudinale, dans la zone située entre l'extrémité de pressage (5) et l'arête de coupe (9) un contour tourné vers l'extérieur, de forme à peu près arquée.

12. Accouplement de tuyau selon la revendications 11, caractérisé en ce que la distance entre la zone du sommet du contour de la face intérieure dans la zone (13) et l'extrémité de pressage limitrophe est supérieure à la distance par rapport à la face de coupe (9) limitrophe.

13. Accouplement de tuyau selon l'une des revendications précédentes, caractérisé en ce qu'au moins la douille d'étanchéité est fabriquée en un acier allié austénitique plus dur que le matériau du tuyau.

14. Accouplement de tuyau selon l'une des revendications précédentes, caractérisé en ce que la douille d'étanchéité (4) est pourvue d'un revêtement de surface en nitrure de titane.

**Claims**

1. A pipe coupling with an insertion stub for the pipe end to be connected, with an internal cone for receiving a correspondingly shaped outer cone at one end (compression end) of a packing sleeve fitted on the pipe end, the other end of which (cutting end) has a further outer cone overlapped by the correspondingly formed inner cone of a tension ring and at least one cutting edge arranged on the inner face of the packing sleeve and directed against the outer wall of the pipe end, whilst the inner face of the outer cone of the compression end is cylindrical and wherein the cone angle of the cutting end is greater than that of the compression end, characterised in that the cone angle of the front face (12) of the cutting end (8) is approximately 70° to 140° and that the zone (13) of the packing sleeve (4) between the compression end (5) and the cutting end (8) has a smaller wall thickness than the adjacent zones, wherein the inner surface of the zone of smaller wall thickness is located in its axial central zone at a distance from the outer pipe surface and the adjacent zones translate into the inner surfaces of the packing sleeve (4) and wherein the zone of smaller wall thickness forms an axially active spring.

2. A pipe coupling according to claim 1, characterised in that the cone angle of the front faces (12) of the cutting end (8) is approximately 90°.

3. A pipe coupling according to claim 1 or 2, characterised in that the cone angle of the compression end (5) is approximately 24°.

4. A pipe coupling according to any one of the preceding claims, characterised in that adjacent to the cutting edges (9, 10) or between these at least one bearing surface (22) is arranged on the inner surface of the cutting end (8)

5. A pipe coupling according to claim 4, characterised in that a bearing surface is provided to both sides adjacent to the cutting edges (9, 10).

6. A pipe coupling according to any one of the preceding claims, characterised in that the edge (19) of the compression end (5) facing towards the outer pipe surface is rounded.

7. A pipe coupling according to any one of the preceding claims, characterised in that the length of the cylindrical inner surface (7) of the compression end (5) is substantially 2/3 of the length of the conical outer surface (6).

8. A pipe coupling according to any one of the preceding claims, characterised in that the internal diameter of the cylindrical inner surface (7) is approximately 0.4 % greater than the outer diameter of the pipe end (3) to be connected.

9. A pipe coupling according to any one of the preceding claims, characterised in that the cutting edge (9, 10) has a cutting surface (14) inclined towards the compression end (5), which is inclined at an angle of between 15° and 25°, preferably 20°, relative to the diameter plane, as well as a free surface (15) inclined towards the other end, which is inclined relative to the longitudinal axis of the packing sleeve at an angle of 12° to 20°, preferably 15°.

10. A pipe coupling according to any one of the preceding claims, characterised in that the inner diameter of the packing sleeve (4) at the cutting edge (9, 10) is approximately 1.6 % greater than the outer diameter of the inserted pipe end (3)

11. A pipe coupling according to any one of the preceding claims, characterised in that the inner surface of the packing sleeve (4) in the zone (13) between the compression end (5) and the cutting edge (9) has, as viewed in longitudinal section, a substantially arc-shaped contour.

12. A pipe coupling according to claim 11, characterised in that the distance of the crest zone of the contour of the inner surface in the zone (13) from the adjacent compression end is greater than to the adjacent cutting edge (9).

13. A pipe coupling according to any one of the preceding claims, characterised in that at least the packing sleeve is made of an austenitic super-refined steel, which is harder than the pipe material.

14. A pipe coupling according to any one of the preceding claims, characterised in that the packing sleeve (4) is provided with a surface coating of titanium nitride.

Fig.1

Fig.2

Fig. 3